# EUROPEAN PATENT SPECIFICATION

(11) **EP 2 100 854 B1**
(45) Date of publication and mention of the grant of the patent: **08.02.2017**
(21) Application number: 09154476.7
(22) Date of filing: 06.03.2009
(51) Int. Cl.: C02F 1/28, C02F 1/66, B01J 20/04, B01J 20/10, C02F 103/10

(54) **Granulate for the adsorption of heavy metals and organic pollutants**
Granulat zur Adsorption von Schwermetallen und organischen Schadstoffen
Granules pour l'adsorption de métaux lourds et polluants organiques

(30) Priority: 14.03.2008 NO 20081348
(43) Date of publication of application: 16.09.2009
(73) Proprietor: North Cape Minerals AS, 6146 Aheim (NO)
(72) Inventor: Slagnes, Steinar, N-6146, Åheim (NO); Wærnes, Øystein, N-6140, Syvde (NO); Westerås, Odd, N-6146, Åheim (NO); Østeraas, Tore, N-1440, Drøbak (NO)
(74) Representative: Hermansen, Cécile Irene

(56) References cited:
- WO-A-86/00288
- WO-A-2006/118537
- DE-A1- 3 816 715
- SCHUILING R D ET AL: "A POTENTIAL PROCESS FOR THE NEUTRALISATION OF INDUSTRIAL WASTE ACIDS BY REACTION WITH OLIVINE" GEOLOGIE EN MIJNBOUW, MARTINUS NIJHOFF PUBLISHERS, DORDRECHT, NL, vol. 65, 1 January 1986 (1986-01-01), pages 243-246, XP000563959

## Description

The present invention relates to a granulate for binding/adsorption of heavy metals and organic environmental poisons. The granulate is based on a mixture of olivine, binder and water.

Adsorption filters which are used as permanent retainers of heavy metals must exhibit stability and good service life. This excludes natural organic filters and synthetically produced organic filters, which in practice will degrade and leak heavy metals.

Adsorption filters for organic environmental poisons such as polychlorinated biphenyls, PCB, polycyclic aromatic hydrocarbons, PAH, and organic tin compounds are difficult to obtain on an industrial scale. However it is known that activated coal has an adsorbing effect due to large specific area. However, activated coal, like synthetic organic filters, does always imply large investment costs. The reason for this is to be found in a cost demanding process for preparation of the materials. According to a publication on the web site Forskning.no "Kull mot forurensning" the most common process for preparation of activated coal involves fine grinding of bitumen - coal or husks from coconuts. The finely ground powder is heated to approx. 540°C in inert atmosphere and activated by sparging of superheated steam at a temperature of at least 870°C.

Further it is previously known that fine particulate olivine exhibits strong binding/adsorption of heavy metals such as arsenic, lead, cadmium, chrome, cupper, nickel, zinc and mercury, and that the mineral possesses a very good neutralizing capacity. In addition, for fine particulate olivine powder, it has been documented a good ability for removal of organic environmental poisons such as PCB, PAH and organic tin compounds from aqueous solutions through binding/adsorption. However this fine particulate olivine powder is not suitable for use in filters, as the flow rate through the filter gets too low or is completely absent.

Report no. UTB 2007/2 from Statens vegvesen discloses coated filter products suitable for heavy metals. These consist of a permeable base material wherein each single grain is covered with a coating containing an active binding media um. In this manner, the coating may be tailored for different purposes by varying the top layer itself through use of different minerals as coating. However the active surface and thereby the actively acting substance is relatively small for the filter product.

JAP 59173193 refers to a filter material for the treatment of water. In this case it is a material for removal of humus from water. The filter material comprises manganese oxide and magnesium silicate, as well as an inorganic binder in the form of cement. The purpose of the magnesium silicate is to form a porous material so that the manganese oxide obtains a large active surface. A magnesium silicate with micro porosity is reported, however it is the manganese oxide and not the magnesium silicate that removes the humus.

WO 2006/118537 A1 discusses the use of wollastonite, magnesite or burnt magnesite as an adsorbent for the adsorption of metals in a liquid.

The present invention solves the above mentioned deficiencies by utilizing the mineral olivine itself (magnesium-, iron- silicate) as the active substance by adsorption/binding of heavy metals and organic environmental poisons. Through granulation of fine particulate olivine, it is achieved a filter product with good porosity and good permeability. At the same time the filter product has a core and en surface consisting of active fine particulate olivine with an ability to bind heavy metals as well as organic environmental poisons. This makes the new filter product unique regarding structure and efficiency when used in filters for adsorption/binding of heavy metals and organic environmental poisons.

### Description of the invention

The present invention provides a granulate for binding of environmental poisons, comprising a mixture of olivine material and binder in a mixing ratio with from 70 to 99 weight-% olivine material and 1 to 30 weight-% binder selected from the group of cement and water-insoluble binders.

The mixing ratio is preferentially 80 to 99 weight-% olivine material and 1 to 20 weight-% binder, especially preferred the ratio is 90 to 98 weight-% olivine material and 2 to 10 weight-% binder

The olivine material may consist of a mixture of olivine powder and olivine grading. With olivine powder it is meant that at least 75 weight-% of the material has particle size < 0.063 millimetres. Olivine grading is olivine material where at least 90 weigh-% of the material has particle size < 2.000 millimetres. The olivine material may be composed with from 0 to 100 % olivine powder and from 0 to 100 % olivine grading. The mixing ratio between olivine powder and olivine grading may for instance be 20 - 50 % olivine powder and 50 - 80 % olivine grading.

The binder may be cement. As a basis it may be any type of cement, preferred are Portland cement and aluminate cement. A mixture of these two types of cement may be preferred, and then in any mixing ratio.

Alternative binders to cement are water-insoluble binders, preferred are water glass in combination with active filler such as activated kaoline and flying ash (geopolymers), gypsum (CaSO₄ x 2 H₂O) and polymers which may be chosen from the group comprising polyvinyl chloride, polyethylene, polypropylene, polyurethane, polyacrylate, polyvinyl acrylate, polyester, polyether, polyacetate, polyvinyl acetate, polystyrene, polycarbonate, epoxy resin, phenol-formaldehyde resin, polyamide and polyacryl amide.

The particle size of the granulate is described by 0 - 20 millimetres, preferred 0.1 to 10 millimetres, especially preferred 0.1 to 5 millimetres. The granulate exhibits a surface area in the range 1 - 200 m² per gram, preferred 5 - 30 m² per gram. The granulate should be nearly water insoluble so that it may be used as filter material for contaminated water. By granulating finely ground olivine together with cement or other types of binders which give water-insoluble granulate, the composition of the granulate may be tailored so that the characteristic is adjusted to the contaminant to be removed. For instance, one may add substances with an ability to bind for instance phosphor, for utilization within sewage treatment,

The granulate exhibits a correspondingly strong ability to adsorption/binding of heavy metals and organic environmental poisons as fine particulate olivine. In addition the granulate exhibits the same good neutralizing capacity as fine particulate olivine. However, the granulate is superior to fine particulate olivine as filter product as it achieves a significantly better permeability for water, which is of crucial importance when using adsorption filters/neutralizing filters. Hence this ability distinguishes the granulate significantly from pure fine particulate olivine powder.

The granulated olivine may be used in filters for removal of heavy metals from contaminated water (e.g. leachate from shooting ranges, etc.) However, the granulate may also be used in industrial filters for removal of poisons from, for instance, process water, etc. As illustrated in table 2, the granulate in significant extent, has the ability to adsorb organic environmental poisons such as organic tin compounds, polychlorinated biphenyls, PCB, and polycyclic aromatic hydrocarbons, PAH. Thus the granulate may also be utilized when filtering industrial process water containing organic environmental poisons, for instance recirculating water from dredging of dock basins, etc.

The granulate is also relevant for use at waste disposal sites, where a border area is desired around the site, with an adsorption material for heavy metals and organic environmental poisons, which may let water through (permeable filter).

The granulate also has acid neutralizing characteristics, and may hence be utilized also as neutralizing filter for acidic pit water and acidic process water.

The preparation of granulate will be dependant on the binder. When selecting cement, or gypsum as binder, it will be necessary to use 2 - 15 weight-% water of the dry content of the mixture when preparing the granulate.

If the binder is water glass in combination with active fillers such as activated kaoline and flying ash (geopolymers) or polymer it is more relevant to use heat when preparing the granulate.

Granulate with a wide range of different characteristics may be prepared through addition other minerals, active coal, specialty chemicals, etc., and thus produce a series of granulate products.

### Experiments

Assays in form of shaking tests in accordance with NS-EN 12457, with granulate comprising 20 - 50 % olivine powder, 40 - 75 % olivine grading, 3 - 12 % cement and admixture of 4 - 9 % water calculated from the dry contents of the mixture.

**Table 1. Adsorption effect of the disclosed composition of granulate in relation to different heavy metals at given concentration.**

| **CONTAMINATING COMPONENT** | **CONTAMINATE WATER** | **AFTER FILTER, GRANULATE** | **ABSORPTION DOCUMENTED** |
|---|---|---|---|
| **Arsenic** | 10.0 µ grams/litre | 1,0 µ grams/litre | **90 %** |
| **Lead** | 9.0 µ grams/litre | 0.8 µ grams/litre | **91 %** |
| **Cadmium** | 10.0 µ grams/litre | 0.9 µ grams/litre | **91 %** |
| **Chrome** | 11.0 µ grams/litre | 5.0 µ grams/litre | **55 %** |
| **Cupper** | 12.0 µ grams/litre | 2.0 µ grams/litre | **83 %** |
| **Nickel** | 12.0 µ grams/litre | 1.0 µ grams/litre | **92 %** |
| **Antimony** | 11.0 µ grams/litre | 3.0 µ grams/litre | **73 %** |

**Table 2. Adsorption effect for the disclosed composition of granulate in relation to different organic environmental poisons, organic tin compounds, PAH and PCB at given concentrations.**

| **CONTAMINATING COMPONENT** | **CONTAMINATED WATER** | **AFTER FILTER, GRANULATE** | **ADSORPTION DOCUMENTED** |
|---|---|---|---|
| **Tri-butyl tin** | 1.1 µ grams/litre | 0.05 µ grams/litre | **96 %** |
| **Tri-phenyl tin** | 0.35 µ grams/litre | 0.03 µ grams/litre | **91 %** |
| **PCB # 28** | 9.4 µ grams/litre | 0.82 µ grams/litre | **91 %** |
| **PCB # 52** | 11.1 µ grams/litre | 0.86 µ grams/litre | **92 %** |
| **PCB # 101** | 10.0 µ grams/litre | 0.92 µ grams/litre | **91 %** |
| **PCB #118** | 7.6 µ grams/litre | 1.0 µ grams/litre | **87 %** |
| **PCB # 138** | 7.7 µ grams/litre | 1.1 µ grams/litre | **86 %** |
| **PCB #153** | 7.6 µ grams/litre | 1.0 µ grams/litre | **87 %** |
| **PCB # 180** | 5.6 µ grams/litre | 1.1 µ grams/litre | **80 %** |
| **Naphtalene** | 11.2 µ grams/litre | 6.9 µ grams/litre | **38 %** |
| **Acenaphtylene** | 11.2 µ grams/litre | 2.2 µ grams/litre | **80 %** |
| **Acenaphtene** | 11.2 µ grams/litre | 2.4 µ grams/litre | **79 %** |
| **Fluorene** | 11.4 µ grams/litre | 0.75 µ grams/litre | **93 %** |
| **Phenanthrene** | 10.9 µ grams/litre | 0.48 µ grams/litre | **96 %** |
| **Anthracene** | 6.8 µ grams/litre | 0.37 µ grams/litre | **95 %** |
| **Fluoranthene** | 11.5 µ grams/litre | 0.35 µ grams/litre | **97 %** |
| **Pyrene** | 11.2 µ grams/litre | 0.37 µ grams/litre | **97 %** |
| **Benzo(a)anthracene** | 11.5 µ grams/litre | 0.86 µ grams/litre | **93 %** |
| **Crysene** | 16.4 µ grams/litre | 1.5 µ grams/litre | **91 %** |
| **Benzo(b)fluoranthene** | 12.0 µ grams/litre | 1.7 µ grams/litre | **86 %** |
| **Benzo(k)fluoranthene** | 11.9 µ grams/litre | 1.6 µ grams/litre | **87 %** |
| **Benzo(a)pyrene** | 10.2 µ grams/litre | 2.1 µ grams/litre | **79 %** |
| **Indeno(1,2,3,cd)pyrene** | 11.1 µ grams/litre | 1.1 µ grams/litre | **90 %** |
| **Dibenzo(a,h)anthracene** | 10.8 µ grams/litre | 0.59 µ grams/litre | **95 %** |
| **Benzo(g,h,in)perylene** | 10.9 µ grams/litre | 0.78 µ grams/litre | **93 %** |

## Claims

1. Granulate for binding of environmental poisons in water,
**characterized in that** it comprises from 70 to 99 weight-% olivine material and from 1 to 30 weight-% binder selected from the group of cement and water-insoluble binders.

2. The granulate according to claim 1,
**characterized in that** the olivine material comprises 0-100% olivine powder and 0-100% olivine grading.

3. The granulate according to claim 1 or claim 2,
**characterized in that** the cement is chosen among Portland cement and aluminate cement.

4. The granulate according to claim 1 or claim 2,
**characterized in that** the water-insoluble binder is selected from the group water glass in combination with active fillers such as activated kaoline and flying ash (geopolymers), gypsum (CaSO₄ x 2 H₂O) and polymers which may be chosen from the group comprising polyvinyl chloride, polyethylene, polypropylene, polyurethane, polyacrylate, polyvinyl acrylate, polyester, polyether, polyacetate, polyvinyl acetate, polystyrene, polycarbonate, epoxy resin, phenol-formaldehyde resin, polyamide and polyacryl amide.

5. The granulate according to any of the preceding claims,
**characterized in that** the mineral is a crystalline olivine with a particle size from 0.001 - 5.0 millimeters.

6. The granulate according to any of the preceding claims,
**characterized in that** the granulate has a particle size from 0.001 - 20 millimeters.

7. The granulate according to any of the preceding claims,
**characterized in that** the surface area is 1 - 200 m² per gram.

8. Use of the granulate of any one of claims 1-7, in filters for adsorption of heavy metals in water.

9. Use of the granulate of any of claims 1-7, in filters for adsorption of organic environmental poisons in water.

10. Use of the granulate of any of claims 1-7 in neutralizing filters for acidic pit water and acidic process water.

## Patentansprüche

1. Granulat zum Binden von Umweltgiften in Wasser,
**dadurch gekennzeichnet, dass** es 70 bis 99 Gew.-% Olivinmaterial und 1 bis 30 Gew.-% Bindemittel, ausgewählt aus der Gruppe aus Zement und wasserunlöslichen Bindemitteln, umfasst.

2. Granulat nach Anspruch 1,
**dadurch gekennzeichnet, dass** das Olivinmaterial 0-100% Olivinpulver und 0-100% Olivinkornverteilung umfasst.

3. Granulat nach Anspruch 1 oder 2,
**dadurch gekennzeichnet, dass** der Zement ausgewählt ist aus Portlandzement und Aluminatzement.

4. Granulat nach Anspruch 1 oder 2,
**dadurch gekennzeichnet, dass** das wasserunlösliche Bindemittel ausgewählt ist aus der Gruppe Wasserglas in Kombination mit aktiven Füllstoffen wie aktiviertem Kaolin und Flugasche (Geopolymere), Calciumsulfat (CaSO₄ x 2 H₂O) und Polymeren, die aus der Gruppe umfassend Polyvinylchlorid, Polyethylen, Polypropylen, Polyurethan, Polyacrylat, Polyvinylacrylat, Poylester, Polyether, Poylacetat, Polyvinylacetat, Polystyrol, Polycarbonat, Epoxidharz, Phenolformaldehydharz, Polyamid und Polyacrylamid ausgewählt werden können.

5. Granulat nach einem der vorhergehenden Ansprüche,
**dadurch gekennzeichnet, dass** es sich bei dem Mineral um einen kristallinen Olivin mit einer Partikelgrößer von 0,001 - 5,0 Millimetern handelt.

6. Granulat nach einem der vorhergehenden Ansprüche,
**dadurch gekennzeichnet, dass** das Granulat eine Partikelgröße von 0,001 - 20 Millimetern aufweist.

7. Granulat nach einem der vorhergehenden Ansprüche,
**dadurch gekennzeichnet, dass** der Oberflächenbereich 1 - 200 m² pro Gramm beträgt.

8. Verwendung des Granulats nach einem der Ansprüche 1-7 in Filtern zur Adsorption von Schwermetallen in Wasser.

9. Verwendung des Granulats nach einem der Ansprüche 1-7 in Filtern zur Adsorption von organischen Umweltgiften in Wasser.

10. Verwendung des Granulats nach einem der Ansprüche 1-7 in neutralisierenden Filtern für säurehaltiges Grubenwasser und säurehaltiges Brauchwasser.

## Revendications

1. Granulat destiné à la fixation de substances toxiques pour l'environnement dans l'eau,
**caractérisé en ce qu'**il comprend entre 70 et 99 % en poids de matière à base d'olivine et entre 1 et 30 % en poids de liant choisi depuis le groupe constitué du ciment et des liants insolubles dans l'eau.

2. Granulat selon la revendication 1,
**caractérisé en ce que** la matière à base d'olivine comprend entre 0 et 100 % de poudre d'olivine et entre 0 et 100 % de granulométrie d'olivine.

3. Granulat selon la revendication 1 ou la revendication 2,
**caractérisé en ce que** le ciment est choisi parmi le ciment Portland et le ciment d'aluminate.

4. Granulat selon la revendication 1 ou la revendication 2,
**caractérisé en ce que** le liant insoluble dans l'eau est choisi depuis le groupe constitué du verre soluble en combinaison avec des liants actifs tels que le kaolin activé et les cendres volantes (géo-polymères), le gypse (CaSO₄ x 2 H₂O) et des polymères qui peuvent être choisis parmi le groupe comprenant le poly(chlorure de vinyle), le polyéthylène, le polypropylène, le polyuréthane, le polyacrylate, le poly(acrylate de vinyle), le polyester, le polyéther, le polyacétate, le poly(acétate de vinyle), le polystyrène, le polycarbonate, la résine époxy, la résine phénol-formaldéhyde, le polyamide, et le polyacrylamide.

5. Granulat selon l'une quelconque des revendications précédentes,
**caractérisé en ce que** le minéral est une olivine cristalline avec une taille de particules comprise entre 0,001 et 5,0 millimètres.

6. Granulat selon l'une quelconque des revendications précédentes,
**caractérisé en ce que** le granulat possède une taille de particules comprises entre 0,001 et 20 millimètres.

7. Granulat selon l'une quelconque des revendications précédentes,
**caractérisé en ce que** la surface de contact est comprise entre 1 et 200 m²/g.

8. Utilisation du granulat selon l'une quelconque des revendications 1 à 7, dans des filtres pour une adsorption de métaux lourds dans l'eau.

9. Utilisation du granulat selon l'une quelconque des revendications 1 à 7, dans des filtres pour une adsorption de substances organiques toxiques pour l'environnement dans l'eau.

10. Utilisation du granulat selon l'une quelconque des revendications 1 à 7 dans des filtres de neutralisation pour de l'eau d'exhaure acide et de l'eau de traitement acide.
